# DEMANDE DE BREVET EUROPEEN

(11) **EP 1 291 991 A2**
(43) Date de publication de la demande: **12.03.2003**
(21) Numéro de dépôt: 02292133.2
(22) Date de dépôt: 29.08.2002
(51) Int. Cl.: H02G 1/08, B08B 9/04, F16L 7/00

(54) **Procédé d'installation d'un élément tubulaire dans une cavité inaccessible à un opérateur**

(30) Priorité: 10.09.2001 FR 0111666; 10.09.2001 FR 0111667
(71) Demandeur: ALCATEL, 75008 Paris (FR)
(72) Inventeur: Herrmann, Peter Friedrich, 78510 Triel sur Seine (FR); Nothofer, Klaus, 40669 Erkrath (DE); Wurier, Bernard, 95760 Valmondois (FR); Gauthier, Philippe, 31600 Muret (FR)
(74) Mandataire: Korakis-Ménager, Sophie

(57) **Abrégé**

La présente invention a pour objet un procédé d'installation d'un élément tubulaire (8) dans une cavité inaccessible (4) comprenant au moins les trois phases successives suivantes :
- une première phase comprenant un relevé topographique et un nettoyage de la paroi interne (7) de ladite cavité,
- une deuxième phase comprenant une détermination de la position des moyens de maintien (12) dudit élément tubulaire et la pose desdits moyens de maintien sur ladite paroi interne, lesdits moyens de maintien (12) comprenant des éléments de maintien dudit élément tubulaire et des moyens de fixation desdits éléments de maintien (12) sur ladite paroi,
- une troisième phase comprenant le guidage et la mise en place dudit élément tubulaire dans lesdits éléments de maintien (12).

## Description

La présente invention se rapporte à un procédé d'installation d'un élément tubulaire, comme un tuyau destiné à loger un ou plusieurs câbles, dans une cavité inaccessible à un opérateur, notamment une zone tubulaire comme un réseau de tuyaux, de canalisations ou de conduits, par exemple pour la collecte d'eaux usées. Dans les zones tubulaires, l'inaccessibilité résulte des trop faibles dimensions de leur section de passage. L'invention concerne plus particulièrement des opérations se déroulant dans des zones tubulaires souterraines non-pressurisées de faible diamètre, en particulier de moins de 200mm de diamètre, tel qu'un égout ou un tuyau d'évacuation d'un bâtiment, dans lesquels l'accès direct visuel et matériel est impossible.

Habituellement l'installation d'un élément tubulaire, comme un tuyau destiné à loger un ou plusieurs câbles, dans une cavité inaccessible généralement tubulaire, comporte le plus souvent trois phases principales.
Une première phase consiste à rendre la paroi interne de la cavité apte à recevoir l'élément tubulaire. Cette phase est principalement une phase d'exploration et de nettoyage des parois de la cavité. L'exploration peut être réalisée à l'aide d'une caméra reliée à un système de traitement et d'exploitation des données, comme décrit dans le document FR-2 609 417. Il est connu d'effectuer le nettoyage d'une cavité à l'aide d'un fluide sous pression, notamment un liquide détergent, projeté par un appareil qui se déplace dans la cavité. Les jets de fluide sous pression peuvent être simultanément utilisés pour la propulsion et la stabilisation de l'appareil comme le décrit le document FR-2 609 417. Si la paroi interne de la cavité est dégradée, il peut être nécessaire de combler certaines dépressions à l'aide d'un mastic comme le décrit le document US-4,782,786.
Une deuxième phase a pour but de mettre en place un moyen destiné à maintenir l'élément tubulaire dans la position qui lui a été assignée. Il s'agit la plupart du temps d'un système comprenant des éléments de maintien répartis régulièrement sur la paroi de la cavité. Le document DE-197 01 787 décrit un système qui est composé d'éléments servant à recevoir le câble et d'un moyen de fixation de ces éléments constitué d'une bague fermée en acier spécial qui est précontrainte élastiquement et s'applique contre la paroi du tube. Le document DE-198 26 880 décrit un dispositif de retenue d'un câble utilisant un élément en plastique à mémoire de forme qui adopte la forme souhaitée sous l'effet du chauffage ou de l'humidité afin de plaquer le câble contre la paroi interne de la cavité. Cette technique est coûteuse et ne se justifie que dans le cas de parois très dégradées.
Une troisième phase est l'installation proprement dite d'un élément tubulaire dans la cavité. L'élément tubulaire est entraîné dans la cavité par un moyen mobile, puis mis en place et retenu dans le système de maintien préalablement fixé.

La présente invention a pour but de proposer un procédé d'installation d'un élément tubulaire dans une cavité inaccessible à un opérateur, tel qu'un tuyau destiné à loger un ou plusieurs câbles, qui élimine les inconvénients de l'art antérieur. L'invention propose en particulier un procédé plus rapide, plus sûr et moins coûteux que les procédés connus.

La présente invention a pour objet un procédé d'installation d'un élément tubulaire dans une cavité inaccessible comprenant au moins les étapes suivantes : une étape de nettoyage de la paroi interne de ladite cavité, une étape de mise en contact dudit élément tubulaire avec des éléments de maintien et une étape de fixation dudit élément tubulaire par pressage contre la paroi de ladite cavité, caractérisé en ce qu'il comprend les trois phases successives suivantes :
- une première phase comprenant ladite étape de nettoyage de la paroi interne de ladite cavité, et comprenant en outre une étape de relevé topographique de la paroi interne de ladite cavité,
- une deuxième phase comprenant une étape de détermination de la position des moyens de maintien dudit élément tubulaire sur ladite paroi interne, et une étape de pose desdits moyens de maintien sur ladite paroi interne, lesdits moyens de maintien comprenant des éléments de maintien dudit élément tubulaire et des moyens de fixation desdits éléments de maintien sur ladite paroi,
- une troisième phase de guidage et de mise en place dudit élément tubulaire dans lesdits moyens de maintien comprenant ladite étape de mise en contact dudit élément tubulaire avec lesdits éléments de maintien et ladite étape de fixation dudit élément tubulaire par pressage contre ladite paroi interne.

Selon un mode de réalisation particulier, la première phase comprend les étapes suivantes :
- on examine la paroi de ladite cavité afin d'en relever la topographie,
- on détermine les opérations de nettoyage nécessaires pour rendre la paroi interne de ladite cavité apte à recevoir lesdits moyens de maintien,
- on nettoie ladite paroi interne par action d'un jet de fluide sous pression,
- si nécessaire, on actionne un outil exerçant une action physique sur ladite paroi.
   Le relevé topographique de la paroi interne de la cavité peut être effectué par un moyen d'exploration et de guidage placé sur un appareil mobile se déplaçant dans la cavité. En mode exploration, il peut par exemple transmettre des données reflétant la topologie de la paroi de la portion de cavité située à l'avant de l'appareil au cours de son déplacement à un moyen d'enregistrement de ces données, comme un ordinateur. En mode guidage, les données sont visualisées par exemple sur un écran et l'opérateur peut ainsi de l'extérieur guider l'appareil de manière précise et adapter son déplacement aux obstacles rencontrés. Le moyen d'exploration et guidage peut être commandé électriquement, mais de préférence la commande est hydraulique ou pneumatique. De préférence le moyen d'exploration et guidage est un dispositif de prise de vue tel qu'une caméra vidéo. Un moyen d'éclairage peut en outre être associé au moyen d'exploration et guidage. De façon classique le moyen d'éclairage peut être constitué par une ampoule alimentée électriquement. Mais, afin d'augmenter la sécurité des opérations en éliminant la présence de courant électrique, on choisit de préférence d'amener la lumière à l'aide d'au moins une fibre optique alimentée par une source lumineuse placée à l'extérieur. Un système de traitement et exploitation des données peut aussi être associé au moyen d'exploration et guidage.
   L'étape de nettoyage est réalisée à l'aide d'un jet de fluide sous pression qui peut être également utilisé pour la propulsion du moyen de nettoyage. Pour un nettoyage efficace, on peut y associer l'action d'un outil capable d'exercer une action physique sur la paroi, comme un racloir, une brosse métallique, un dispositif d'abrasion (papier de verre) pour éliminer des surépaisseurs gênantes ou tout autre instrument apte à égaliser et assainir la surface interne de la paroi de la canalisation. La mise en oeuvre d'un tel outil peut se faire simultanément à l'action des jet de fluide sous pression ou bien lors d'un passage ultérieur.

Selon un autre mode de réalisation, la deuxième phase comprend les étapes suivantes :
- on détermine l'emplacement de chacun desdits moyens de maintien à partir dudit relevé topographique de la paroi interne,
- on prépare lesdits emplacements à recevoir lesdits moyens de maintien,
- on fixe lesdits éléments de maintien sur lesdits emplacements à l'aide desdits moyens de fixation.
   On détermine l'emplacement de chacun desdits moyens de maintien à l'aide d'un ordinateur à partir des données recueillies au cours de la première phase par le moyen d'exploration et guidage. Les emplacements déterminés sont alors soigneusement décapés et séchés afin de ne pas compromettre la fixation des éléments de maintien. La préparation de la paroi interne aux emplacements déterminés peut aussi comprendre des opérations destinées à faciliter l'accrochage des moyens de fixation, par exemple en augmentant la rugosité de la surface par un rainurage.
   Selon une première variante, la deuxième phase comprend les étapes suivantes :

- on détermine l'emplacement de chacun desdits moyens de maintien à partir dudit relevé topographique,
- on prépare lesdits emplacements à recevoir lesdits moyens de maintien,
- on dépose lesdits moyens de fixation sur lesdits emplacements,
- on dispose lesdits éléments de maintien sur lesdits moyens de fixation de manière à fixer lesdits éléments sur la paroi interne de ladite cavité.
   Selon une seconde variante, la deuxième phase comprend les étapes suivantes :

- on détermine l'emplacement de chacun desdits moyens de maintien à partir dudit relevé topographique,
- on prépare lesdits emplacements à recevoir lesdits moyens de maintien,
- on dépose lesdits moyens de fixation sur lesdits éléments de maintien,
- on dispose lesdits éléments de maintien sur lesdits emplacements de manière à ce que lesdits moyens de fixation soient placés entre lesdits éléments et ladite paroi interne de ladite cavité.
   Lesdits éléments de maintien sont des pièces comprenant un logement destiné à coopérer avec l'élément tubulaire. De préférence les éléments de maintien sont constitués par des pièces dont la forme est adaptée à la géométrie de la cavité. En particulier, dans les canalisations remplissant en outre d'autres fonctions qui nécessitent un nettoyage périodique, la forme des éléments de maintien sera définie de manière à résister aux moyens de nettoyage habituellement utilisés. De préférence lesdits éléments de maintien sont constitués d'un matériau apte à résister aux agressions de l'environnement, notamment aux agressions chimiques, comme une matière plastique telles que le PVC. De préférence les moyens de fixation sont constitués par une colle, qui peut être un solvant du PVC.

Selon encore un autre mode de réalisation, la troisième phase comprend les étapes suivantes :
- on amène ledit élément tubulaire jusqu'au niveau de l'un desdits éléments de maintien par un moyen de guidage,
- on pousse ledit élément tubulaire à l'aide d'une presse vers ledit élément de maintien jusqu'à ce que ledit élément tubulaire soit retenu par ledit élément de maintien.
   De préférence le moyen de guidage comporte en outre un moyen pour repérer la verticale, par exemple un niveau d'eau. De préférence encore ledit moyen de guidage comprend une gouttière dans laquelle est allongé l'élément tubulaire. De préférence ladite presse est une presse à commande hydraulique ou pneumatique.

Le procédé selon la présente invention est mis en oeuvre de préférence en utilisant un appareil comportant un moyen de déplacement linéaire par propulsion et un moyen permettant son orientation dans l'espace, ledit moyen de propulsion et ledit moyen d'orientation étant commandés par un moyen hydraulique ou pneumatique. Ceci a comme avantage de permettre à l'appareil de se déplacer selon une trajectoire qui n'est pas strictement linéaire, par exemple de pouvoir se positionner par rapport à une paroi ou de contourner un éventuel obstacle en déviant sa trajectoire aussi bien horizontalement que verticalement.
Le déplacement de l'appareil selon l'invention dans la cavité doit être commandé à distance. Un autre avantage est l'absence d'énergie électrique pour commander le moyen de propulsion et le moyen d'orientation. D'une part ceci facilite la miniaturisation de l'appareil qui peut ainsi accéder à des zones tubulaires dont le diamètre est inférieur à 200mm. D'autre part la sécurité d'utilisation de cet appareil est améliorée par l'absence de courant électrique dans une zone difficilement contrôlable.

De préférence, le moyen de commande comprend un interrupteur hydraulique ou pneumatique, une valve et une entrée de fluide sous pression élevée coopérant avec ladite valve. L'ouverture ou la fermeture de la valve est déclenchée à l'aide d'un liquide sous pression dans le cas d'un interrupteur hydraulique ou bien d'un gaz sous pression dans le cas d'un interrupteur pneumatique. L'interrupteur est par exemple constitué d'une tubulure d'amenée de fluide sous pression modérée de relativement faible diamètre communiquant avec l'extérieur. La pression de fluide est introduite dans cette tubulure depuis l'extérieur selon la décision de l'opérateur. L'ouverture de la valve permet l'envoi d'un jet de fluide sous pression élevée vers le moyen de propulsion et/ou le moyen d'orientation.

De préférence, le moyen d'orientation comprend au moins un orifice placé sur la surface latérale externe de l'appareil et communiquant avec la valve du moyen de commande. De préférence encore le moyen d'orientation comprend plusieurs orifices disposés de préférence symétriquement sur la périphérie de l'appareil. Lors de l'ouverture de la valve correspondante, un jet de fluide sous pression s'échappe avec force par cet orifice provoquant la mise en mouvement de l'appareil. Selon la disposition et l'orientation de cet orifice, l'émission d'un jet de fluide sous pression provoquera un mouvement latéral de l'appareil ou la mise en rotation de l'appareil dans un sens ou dans l'autre. L'orifice est agencé de manière à produire un jet de fluide dans une direction déterminée : horizontale, verticale ou oblique, vers la droite, vers la gauche, vers le haut ou vers le bas. Selon une variante de réalisation de l'appareil, l'orientation des orifices peut être modifiée en cours du fonctionnement de l'appareil. Selon une autre variante de réalisation, la puissance des jets de fluide émis par les orifices peut être modulée.

De préférence, le moyen de propulsion comprend au moins un orifice principal disposé sur la surface externe dudit appareil et communiquant avec une valve du moyen de commande. De préférence encore le moyen de propulsion comprend plusieurs orifices disposés sur les surfaces transversales arrière ou avant de l'appareil, de manière à générer des jets de fluide permettant un déplacement linéaire vers l'avant ou vers l'arrière. Le fluide sortant engendre une couche de glissement sous l'appareil ce qui contribue à faciliter son déplacement. Lorsque l'appareil selon l'invention est utilisé par exemple pour le nettoyage d'une canalisation, plusieurs passages successifs dans un sens puis dans l'autre peuvent être nécessaires.

Selon une variante, le moyen de propulsion comprend en outre au moins un orifice secondaire disposé sur le tube d'amenée de fluide sous pression élevée. La force de propulsion est ainsi mieux distribuée ce qui améliore encore la maniabilité de l'appareil.

Selon un premier mode de réalisation, le procédé selon l'invention utilise un appareil comportant en outre un moyen d'exploration et guidage. En mode exploration, il peut par exemple transmettre des données reflétant la topologie de l'endroit où se trouve l'appareil à un moyen d'enregistrement de ces données, comme un ordinateur. En mode guidage, les données sont visualisées par exemple sur un écran et l'opérateur peut ainsi de l'extérieur guider l'appareil de manière précise et adapter son déplacement aux obstacles rencontrés. Le moyen d'exploration et guidage peut être commandé électriquement, mais de préférence la commande est hydraulique ou pneumatique. De préférence le moyen d'exploration et guidage est un dispositif de prise de vue tel qu'une caméra vidéo.

Selon un deuxième mode de réalisation de l'invention, le procédé selon l'invention utilise un appareil comportant en outre un moyen d'éclairage. De façon classique le moyen d'éclairage peut être constitué par une ampoule électrique mais on utilisera de préférence au moins une fibre optique alimentée par une source lumineuse placée à l'extérieur.

Selon un troisième mode de réalisation, le procédé selon l'invention utilise un appareil comportant en outre un moyen pour repérer la verticale, par exemple un niveau d'eau.

Le procédé selon la présente invention peut aussi utiliser un appareil équipé en outre de dispositifs assurant d'autres fonctions.
Selon un quatrième mode de réalisation de l'invention, dans l'étape du procédé destiné au nettoyage des parois souillées d'une canalisation en vue de l'installation d'un élément tubulaire comme un tuyau destiné à loger un ou plusieurs câbles, l'appareil comporte en outre un moyen de nettoyage. Ce moyen de nettoyage peut être constitué par un jet de fluide sous pression. Ce jet de fluide sous pression peut par exemple être également utilisé pour la propulsion. Ce moyen de nettoyage peut aussi comprendre un outil capable d'exercer une action physique sur la paroi, comme un racloir, une brosse métallique, un dispositif d'abrasion en vue d'éliminer des surépaisseurs gênantes ou tout autre instrument apte à égaliser et assainir la surface interne de la paroi de la canalisation.

Selon un cinquième mode de réalisation, dans l'étape du procédé destiné à effectuer la pose d'un élément tubulaire tel qu'un tuyau destiné à loger un ou plusieurs câbles dans une canalisation d'égout, l'appareil comporte en outre un moyen de guidage d'un élément tubulaire, par exemple une gouttière.

Selon un sixième mode de réalisation, dans l'étape du procédé destiné à effectuer la pose d'un élément tubulaire tel qu'un tuyau destiné à loger un ou plusieurs câbles dans une canalisation d'égout, l'appareil comporte en outre un moyen d'application d'un élément tubulaire sur une paroi préalablement munie de moyens de maintien. Ce moyen d'application peut être par exemple une presse à commande hydraulique ou pneumatique..

Le procédé selon l'invention est destiné plus particulièrement à être utilisé pour des zones tubulaires de diamètre inférieur à 200mm, de préférence inférieur à 150mm, et dont le diamètre est de préférence d'au moins 80mm.

D'autres caractéristiques et avantages de la présente invention apparaîtront au cours de la description suivante de modes de réalisation donnés à titre illustratif mais nullement limitatif, en référence au dessin annexé sur lequel :
- la figure 1 représente en coupe partielle une zone tubulaire à équiper et symbolise schématiquement les trois phases de l'installation,
- la figure 2 est une vue en perspective d'un exemple d'appareil utilisé pour la réalisation de la première phase,
- la figure 3 est une coupe d'un exemple d'appareil utilisé pour la réalisation de la deuxième phase,
- les figures 4A, 4B et 4C représentent respectivement vue de profil et de dessous un mode de réalisation d'un élément de maintien,
- la figure 5 est une vue en perspective d'un exemple d'appareil utilisé pour la réalisation de la troisième phase,
- la figure 6 montre une vue en perspective d'une variante de réalisation de l'appareil de la figure 2 comportant des orifices secondaires de propulsion,
- la figure 7 est une coupe montrant un mode de réalisation du moyen de commande de l'appareil utilisé pour la mise en oeuvre du procédé selon l'invention,
- la figure 8 est un schéma fonctionnel du moyen de commande de la figure 7,
- la figure 9 est une coupe transversale schématique montrant la disposition des entrées de fluide sous pression du moyen de commande de la figure 7,
- la figure 10A et 108 montrent en coupe deux dispositions des amenées de fluide sous pression,
- la figure 11 est une représentation schématique de la disposition des orifices du moyen d'orientation de l'appareil utilisé pour la mise en oeuvre du procédé selon l'invention lorsque ceux-ci sont destinés à produire un déplacement latéral de l'appareil,
- la figure 12 est une représentation schématique de la disposition des orifices du moyen d'orientation de l'appareil utilisé pour la mise en oeuvre du procédé selon l'invention lorsque ceux-ci sont destinés à produire une rotation de l'appareil.

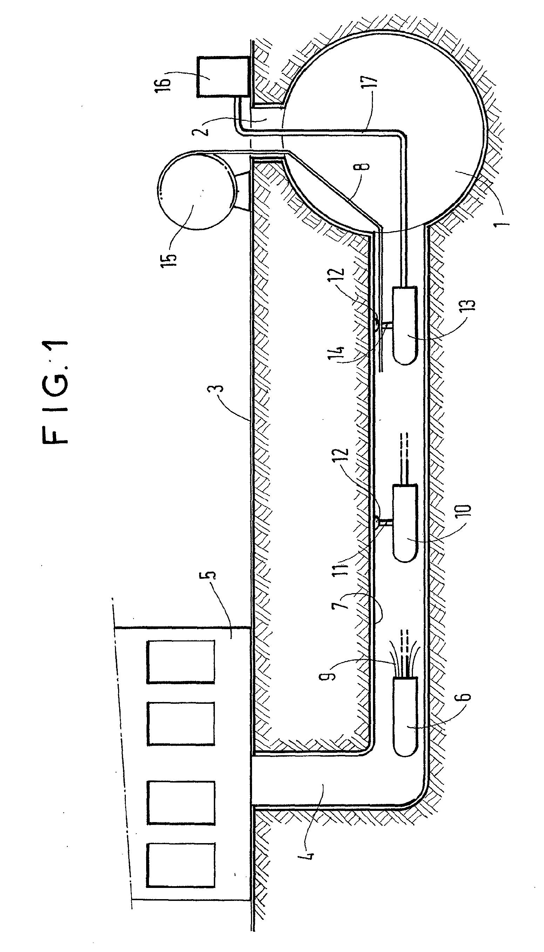

La figure 1 représente en coupe une canalisation d'égout 1 souterraine munie d'un orifice d'accès 2 débouchant à la surface du sol 3. Cette canalisation 1 comporte un conduit latéral 4 de moindre diamètre qui la relie à un bâtiment 5. Dans le conduit 4 on a représenté symboliquement un appareil 6 destiné à explorer et mettre la surface interne 7 du conduit 4 en état de recevoir un élément tubulaire, comme prévu par la première phase. L'élément tubulaire peut être un tube en métal 8, comme l'acier inoxydable, ou en plastique, par exemple du PVC, qui est destiné à accueillir un ou plusieurs câbles. Cet appareil 6 est par exemple un appareil de nettoyage de la paroi interne 7 par jet de liquide 9. On a aussi représenté symboliquement un appareil 10 capable d'effectuer la pose des moyens de maintien de l'élément tubulaire 8, comme le prévoit la deuxième phase. L'appareil 10 porte par exemple un outil 11 de mise en place des éléments de maintien 12. On a enfin représenté symboliquement un appareil 13 capable d'effectuer le guidage et la pose d'un élément tubulaire 8 selon la troisième phase du procédé de l'invention. L'appareil 13 comprend un outillage 14 permettant d'effectuer la pose dans l'élément de maintien 12 de l'élément tubulaire 8 provenant d'une réserve 15 placée en surface.
L'élément tubulaire peut être notamment, mais pas exclusivement, un tuyau destiné à contenir des câbles à fibres optiques. Les appareils 6, 10 et 13 peuvent être propulsés par exemple par un fluide mis sous pression dans un compresseur 16 et acheminé par un tuyau 17 jusqu'à l'appareil correspondant.

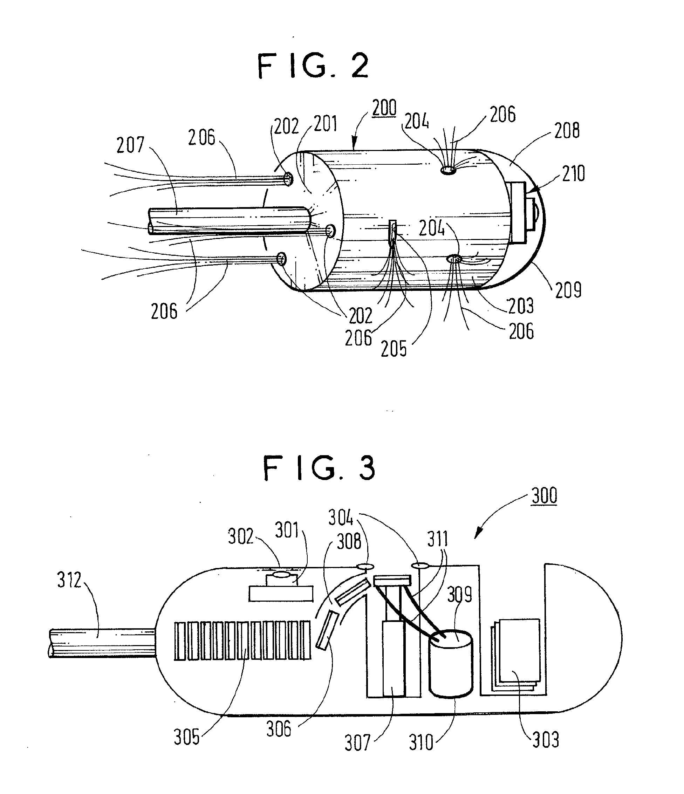

Un exemple particulier de réalisation d'un appareil 6 mis en oeuvre dans la première phase du procédé est donné par l'appareil 200 représenté sur la figure 2. Sur la surface transversale arrière 201 de l'appareil 200, est visible le moyen de propulsion constitué des orifices 202, ici au nombre de trois, disposées symétriquement. Sur la surface latérale 203, sont disposées des orifices 204 permettant un déplacement latéral de l'appareil 200 et des orifices 205 permettant la mise en rotation de l'appareil 200. Par ces orifices 202, 204 et 205 des jets de fluide sous pression 206 sont émis afin de produire une poussée qui déplace l'appareil 200. Le fluide sous pression est amené depuis l'extérieur par un tube 207 relié à l'arrière de l'appareil 200. Selon une variante, l'appareil 200 de forme générale cylindrique comporte en outre à l'avant un compartiment 208 protégée par une visière arrondie 209 dans lequel est logé un dispositif de prise de vue tel qu'une caméra vidéo 210. La visière 209 peut être équipée d'un système de nettoyage comme des jets d'eau et/ou un essuie-glace non représentés.

Un exemple particulier de réalisation d'un appareil 10 mis en oeuvre dans la deuxième phase du procédé est donné par l'appareil 300 représenté sur la figure 3. Dans une première étape, l'appareil 300 effectue la préparation des emplacements où vont être fixés les éléments de maintien tels qu'ils ont été déterminés à la suite du relevé topographique effectué au cours de la première phase. Ces emplacements sont repérés par exemple grâce à un dispositif de prise vue dirigé vers la paroi interne 7, comme une caméra 301 placée dans l'appareil 300 et protégée par un hublot 302. L'appareil 300 comprend aussi un dispositif rotatif 303 porteur d'un outil abrasif utilisant par exemple du sable, du papier de verre ou une brosse métallique. L'emplacement choisi est ensuite dépoussiéré et séché par de l'air sous pression expulsé par au moins un orifice 304. L'appareil comprend également une réserve 305 d'éléments de maintien 306 communicant avec un outil de pose 307 par un passage 308 le long duquel sont acheminé les éléments 306 jusqu'à l'outil 307. Selon une forme d'exécution particulière de l'invention le moyen de fixation est constitué par de la colle 309 contenue dans un réservoir sous pression 310 relié par au moins un tuyau 311 à la partie supérieure de l'outil 307. L'outil 307 est par exemple une presse pneumatique ou hydraulique. L'appareil 300 se déplace par propulsion sous l'effet d'un fluide sous pression, dans ce cas de préférence un gaz comme l'air, arrivant par le tube 312 en communication avec l'extérieur et relié à des orifices non représentés situés à l'arrière de l'appareil 300. L'air sous pression arrivant par le tube 312 peut également être utilisé pour alimenter l'orifice 304.
Une fois introduit dans le conduit 4, l'appareil 300 est propulsé par de l'air sous pression envoyé via le tuyau 312 jusqu'à l'emplacement choisi pour y fixer un élément de maintien 306 repéré par la caméra 301. L'admission d'air sous pression est interrompue et le dispositif 303 met en action l'outil qu'il porte. L'abrasion peut être effectuée à sec, et dans ce cas un jet d'air pulsé au travers de l'orifice 304 permet de dépoussiérer l'emplacement, ou en présence d'eau, et dans ce cas l'air pulsé de préférence chaud est utilisé pour sécher l'emplacement choisi. Un élément de maintien 306 est alors envoyé depuis la réserve 305 vers l'outil de pose 307. Selon un premier mode de réalisation illustré sur la figure 3, grâce au tuyau 311, de la colle 309 est alors déposée sur la surface de l'élément 306 qui fait face à la paroi interne 7. L'élément de maintien 306 est enfin appliqué sur la paroi interne 7 au moyen de l'outil 307.
Selon un autre mode de réalisation non représenté, la colle est déposée sur l'emplacement choisi de la paroi 7 et un éléments de maintien 306 est appliqué sur le dépôt de colle 309 à l'aide de l'outil 307.

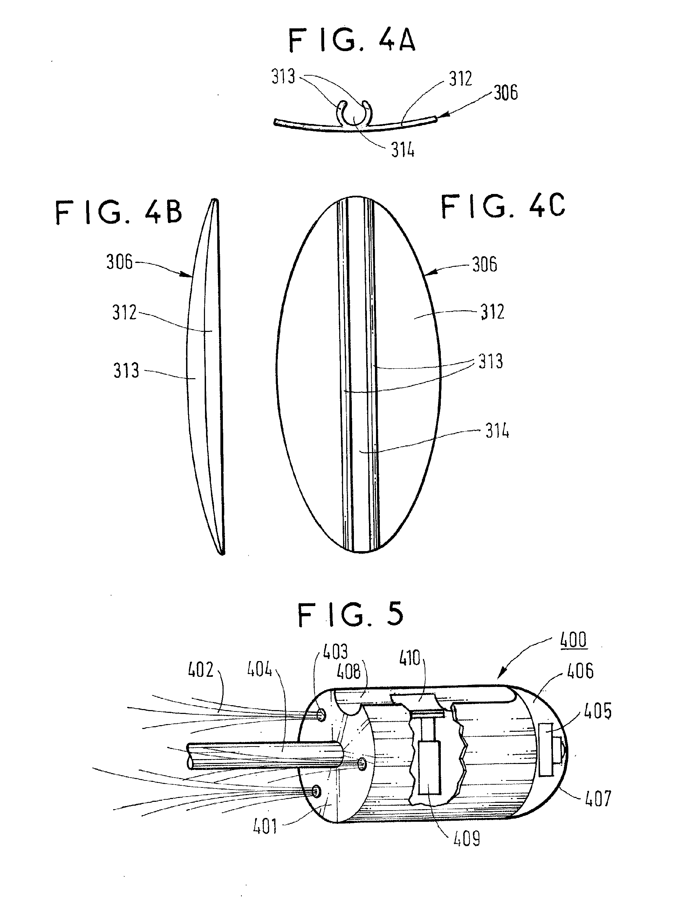

Un mode particulier de réalisation d'un élément de maintien 306 est représenté sur les figures 4A, 4B et 4C. La figure 4A est une vue de profil de l'élément de maintien 306 selon un axe longitudinal de la cavité correspondant à la direction de déplacement de l'appareil. L'élément de maintien 306 comprend une base 312 de forme courbe épousant le profil de la paroi sur laquelle elle sera fixée et un organe de retenue 313 allongé dont la section a la forme d'un anneau interrompu délimitant un logement 314 dans lequel viendra s'insérer l'élément tubulaire. La figure 4B est une vue de profil de l'élément de maintien 306 selon un axe transversal de la cavité permettant d'observer sa forme hydrodynamique dans la direction de déplacement de l'appareil. La figure 4C est une vue de dessous de l'élément de maintien 306 montrant la base 312 de forme générale ovale et l'organe de retenue 313 laissant accessible le logement 314 pour l'introduction de l'élément tubulaire.

Un exemple particulier de réalisation d'un appareil 13 mis en oeuvre dans la troisième phase du procédé est donné par l'appareil 400 représenté sur la figure 5. Sur la surface transversale arrière 401 de l'appareil 400, est visible le moyen de propulsion constitué par des jets de fluide sous pression 402 expulsés des orifices 403, ici au nombre de trois, disposées symétriquement reliés à un tube 404 d'amenée d'un fluide sous pression depuis l'extérieur. L'appareil 400 est muni d'un dispositif de prise de vue 405 situé à l'intérieur d'un compartiment 406 situé à l'avant de l'appareil et protégée par une visière arrondie 407. Une gouttière 408 est ménagée sur l'appareil 400 de manière à pouvoir recevoir et guider l'élément tubulaire 8. L'appareil 400 est également équipé d'un moyen 409, placé à l'intérieur de l'appareil, permettant d'appliquer l'élément tubulaire 8 contre la paroi interne 7 sur laquelle ont été préalablement fixés les éléments de maintien 306. Arrivé à la hauteur d'un élément de maintien 306, l'appareil 400 stoppe sa progression et l'élément tubulaire 8 allongé dans la gouttière 408 est poussé verticalement vers le haut grâce au moyen 409, qui est par exemple une presse, au travers d'une ouverture 410 pratiquée dans le fond de la gouttière 408. La presse 409 est commandée de préférence par un moyen hydraulique ou pneumatique. Afin d'améliorer la précision de la pose de l'élément tubulaire 8, l'appareil 400 peut être équipé d'un niveau d'eau non représenté permettant de repérer la verticale.

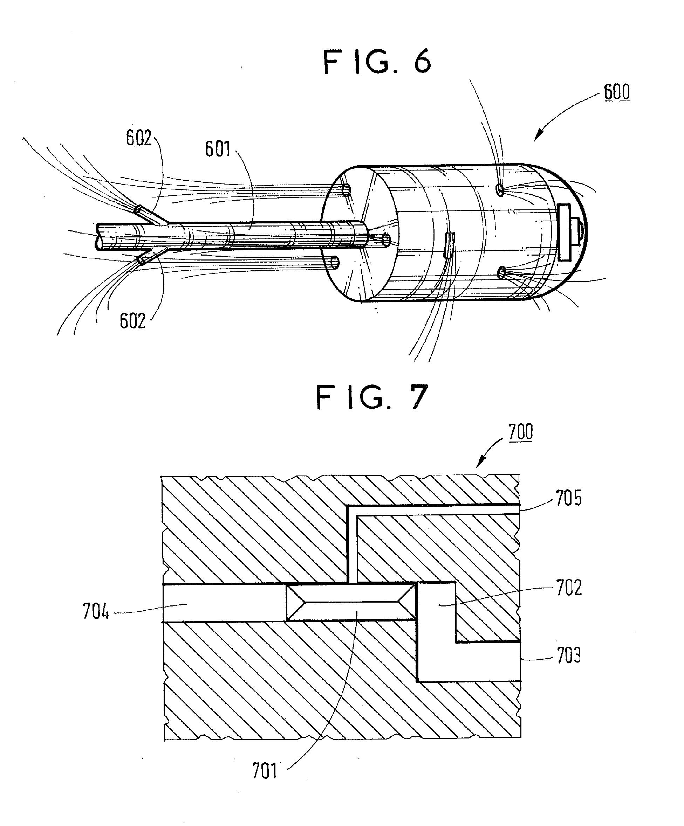

On a représenté sur la figure 6 un appareil 600 qui est une variante de l'appareil 200 de la figure 2. Afin de distribuer la poussées des jets de fluide utilisés pour la propulsion sur une partie de la longueur du tube 601, des orifices secondaires 602 peuvent être aménagés comme le montre la figure 6.

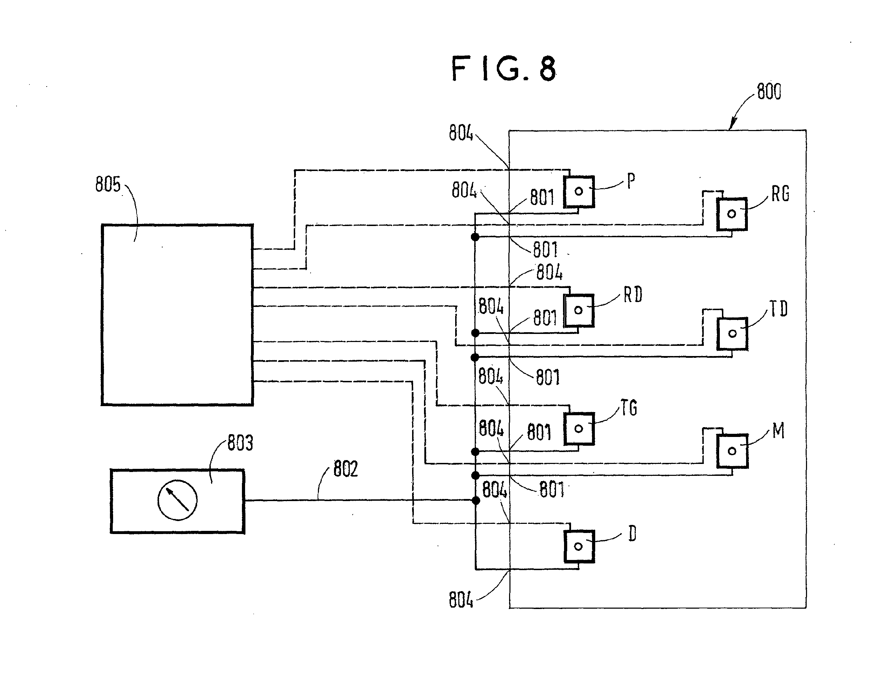

Le procédé selon l'invention est avantageusement mis en oeuvre grâce à un appareil comportant un moyen de commande 700 dirigé depuis l'extérieur dont le fonctionnement est schématisé sur les figures 7 et 8. Le moyen de commande 700 du moyen de propulsion et du moyen d'orientation de l'appareil télécommandé selon l'invention est représenté en coupe sur la figure 7. On distingue la valve 701 dont l'une des extrémités 702 est reliée à une entrée de fluide 703 sous pression élevée et dont l'autre extrémité 704 dirige le jet de fluide sous pression vers un orifice du moyen de propulsion ou du moyen d'orientation de l'appareil. La valve 701 est actionnée par la pression d'un fluide arrivant par une tubulure de commande 705 servant d'interrupteur. La valve 701 peut comporter des moyens lui permettant de moduler la puissance du jet de fluide à la sortie de l'extrémité 704.

Sur la figure 8, on a représenté un moyen de commande 800 comprenant plusieurs valves analogues à celle de la figure 2, chacune communiquant avec un ou plusieurs orifices correspondant à un déplacement possible. Une valve P commande le moyen de propulsion, des valves RD et RG commandent respectivement la rotation de l'appareil à droite et à gauche, des valves TD et TG commandent un déplacement horizontal permettant à l'appareil de tourner vers la droite ou vers la gauche, et des valves D et M commandent un déplacement vertical permettant à l'appareil de descendre ou de monter. Chacune de ces valves est reliée respectivement à l'arrivée de fluide 801 sous pression élevée. Les entrées 801 communiquent avec un tube commun 802 qui amène le fluide mis sous forte pression par un compresseur 803 placé à l'extérieur. Chacune de ces valves est actionnée par un fluide sous pression moindre conduit par une tubulure de commande 804. L'interrupteur constitué par l'amenée du fluide sous pression modérée est commandée depuis l'extérieur par l'opérateur par l'intermédiaire d'un commutateur de pression 805 qui impose la consigne de pression correspondant à l'ouverture ou à la fermeture de chacune des valves.

Le moyen de commande, le moyen de propulsion et le moyen d'orientation de l'appareil mis en oeuvre dans le procédé selon l'invention utilise comme source d'énergie un fluide sous pression. L'alimentation en fluide destiné à assurer la propulsion s'effectue à une pression élevée de telle sorte qu'il soit possible de libérer une puissance pouvant atteindre plusieurs kW lors le fluide est ramené à la pression atmosphérique. La pression du fluide dans la tubulure de commande des valves est moindre. Le fluide sous pression destiné à assurer la propulsion et l'orientation est distribué dans l'appareil selon l'invention par plusieurs entrées.

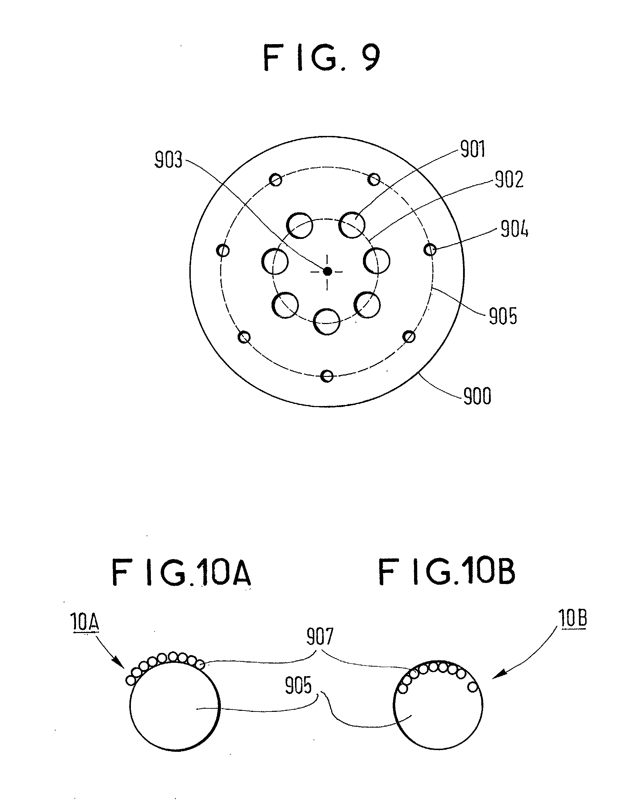

La figure 9 représente en coupe un arrangement possible de ces entrées dans un compartiment cylindrique 900 de l'appareil. Des entrées 901 d'un diamètre par exemple de l'ordre de 12mm, disposées sur un cercle 902 centré sur l'axe longitudinal 903 de l'appareil, ont pour rôle d'alimenter en fluide sous pression, via une valve, respectivement les orifices de propulsion ou les orifices d'orientation. Des tubulures 904 de diamètre moindre, de l'ordre de 1mm à 2mm et disposées sur un cercle 905 centré sur l'axe 903, permettent l'admission du fluide sous pression actionnant les valves du moyen de commande.

Les entrées 901 se réunissent à l'arrière de l'appareil en un tube unique 906 visible sur les figures 10A et 10B. Chacune des tubulures 904 est dans le prolongement d'une tubulure 907 provenant de l'extérieur. Les tubulures 907 peuvent être disposées autour du tube 906, de diamètre supérieur, pour former une première variante 10A du conducteur 207 de la figure 2. Les tubulures 907 peuvent aussi être disposées à l'intérieur du tube 906 pour former une deuxième variante 10B du conducteur 207 de la figure 2. Le tube 906 et les tubulures 907 sont de préférence constitués d'une matière souple apte à épouser les courbes résultant du déplacement de l'appareil.

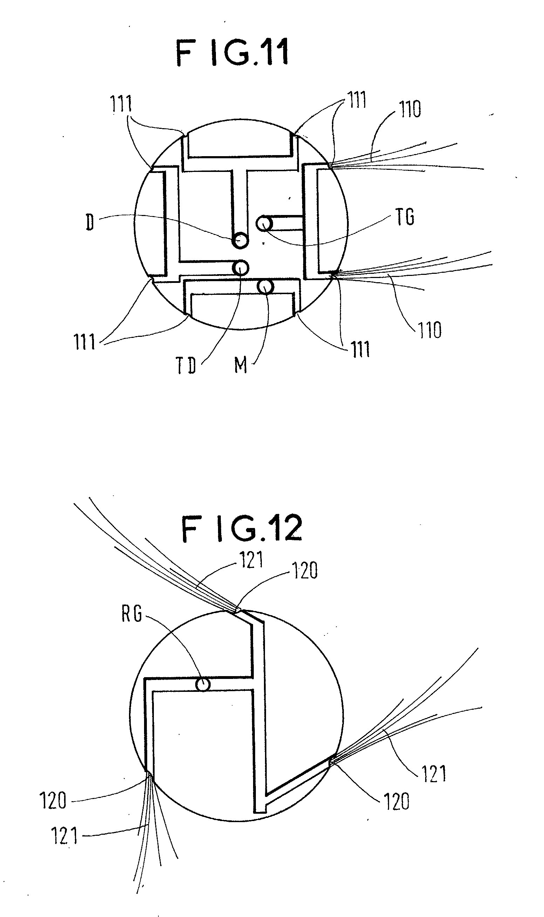

La figure 11 est une coupe montrant un exemple de disposition des orifices permettant de déplacer verticalement et horizontalement l'appareil utilisé dans le procédé selon l'invention. Chaque paire d'orifices produisant un jet de fluide dans la même direction est reliée à une valve correspondant à un déplacement possible. Sur la figure 11, la valve TG est ouverte et un jet de fluide 110 horizontal s'échappe de chacun des orifices 111 lui correspondant. Sous l'effet de ces jets, l'appareil tourne vers la gauche dans un plan horizontal.

De manière analogue sur la figure 12, la valve RG communique avec trois orifices 120 disposés symétriquement et orientés selon un même angle, compris entre 0° et 45°, par rapport à la circonférence de l'appareil. Sur la figure 12, la valve RG est ouverte et un jet de fluide 121 s'échappe dans un plan vertical de chacun des orifices 120 lui correspondant. Sous l'effet de ces jets, l'appareil effectue une rotation dans le sens des aiguilles d'une montre dans un plan vertical.

## Revendications

1. Procédé d'installation d'un élément tubulaire dans une cavité inaccessible comprenant au moins les étapes suivantes : une étape de nettoyage de la paroi interne de ladite cavité, une étape de mise en contact dudit élément tubulaire avec des éléments de maintien et une étape de fixation dudit élément tubulaire par pressage contre la paroi de ladite cavité, **caractérisé en ce qu'**il comprend les trois phases successives suivantes :
- une première phase comprenant ladite étape de nettoyage de la paroi interne de ladite cavité, et comprenant en outre une étape de relevé topographique de la paroi interne de ladite cavité,
- une deuxième phase comprenant une étape de détermination de la position des moyens de maintien dudit élément tubulaire sur ladite paroi interne, et une étape de pose desdits moyens de maintien sur ladite paroi interne, lesdits moyens de maintien comprenant des éléments de maintien dudit élément tubulaire et des moyens de fixation desdits éléments de maintien sur ladite paroi,
- une troisième phase de guidage et de mise en place dudit élément tubulaire dans lesdits moyens de maintien comprenant ladite étape de mise en contact dudit élément tubulaire avec lesdits éléments de maintien et ladite étape de fixation dudit élément tubulaire par pressage contre ladite paroi interne.

2. Procédé selon la revendication 1, dans lequel ladite première phase comprend les étapes suivantes :
- on examine la paroi interne de ladite cavité afin d'en relever la topographie,
- on détermine les opérations de nettoyage nécessaires pour rendre la paroi interne de ladite cavité apte à recevoir lesdits moyens de maintien,
- on nettoie ladite paroi interne par action d'un jet de fluide sous pression,
- si nécessaire, on actionne un outil exerçant une action physique sur ladite paroi.

3. Procédé selon l'une des revendications 1 et 2, dans lequel ledit relevé est effectué par un moyen d'exploration et guidage.

4. Procédé selon la revendication 3, dans lequel un moyen d'éclairage est associé audit moyen d'exploration et guidage.

5. Procédé selon la revendication 4, dans lequel ledit moyen d'éclairage est une fibre optique.

6. Procédé selon la revendication 3, dans lequel un système de traitement et exploitation des données est associé audit moyen d'exploration et guidage.

7. Procédé selon l'une des revendications précédentes, dans lequel ladite deuxième phase comprend les étapes suivantes :
- on détermine l'emplacement de chacun desdits moyens de maintien à partir dudit relevé topographique de ladite paroi interne,
- on prépare lesdits emplacements à recevoir lesdits moyens de maintien,
- on fixe lesdits éléments de maintien sur lesdits emplacements à l'aide desdits moyens de fixation.

8. Procédé selon la revendication 7, dans lequel ladite deuxième phase comprend les étapes suivantes :
- on détermine l'emplacement de chacun desdits moyens de maintien à partir dudit relevé topographique,
- on prépare lesdits emplacements à recevoir lesdits moyens de maintien,
- on dépose des moyens de fixation sur lesdits emplacements,
- on dispose des éléments de maintien sur lesdits moyens de fixation.

9. Procédé selon la revendication 7, dans lequel ladite deuxième phase comprend les étapes suivantes :
- on détermine l'emplacement de chacun desdits moyens de maintien à partir dudit relevé topographique,
- on prépare lesdits emplacements à recevoir lesdits moyens de maintien,
- on dépose des moyens de fixation sur des éléments de maintien,
- on dispose lesdits éléments de maintien sur lesdits emplacements de manière à ce que lesdits moyens de fixation soient placés entre lesdits éléments et ladite paroi interne de ladite cavité.

10. Procédé selon l'une des revendications 7 à 9, dans lequel lesdits éléments de maintien sont des pièces comprenant un logement destiné à coopérer avec l'élément tubulaire.

11. Procédé selon l'une des revendications 7 à 10, dans lequel lesdits moyens de fixation sont constitués par une colle.

12. Procédé selon l'une des revendications précédentes, dans lequel ladite troisième phase comprend les étapes suivantes :
- on amène ledit élément tubulaire jusqu'au niveau de l'un desdits éléments de maintien par un moyen de guidage,
- on pousse ledit élément tubulaire à l'aide d'une presse vers ledit élément de maintien jusqu'à ce que ledit élément tubulaire soit retenu par ledit élément de maintien.

13. Procédé selon la revendication 12, dans lequel ledit moyen de guidage comprend une gouttière

14. Procédé selon l'une des revendications 12 et 13, dans lequel ledit moyen de guidage comprend un moyen pour repérer la verticale.

15. Procédé selon l'une des revendications 12 à 14, dans lequel ladite presse est une presse à commande hydraulique ou pneumatique.

16. Procédé selon l'une des revendications précédentes, utilisant un appareil comportant un moyen de déplacement linéaire par propulsion et un moyen permettant son orientation dans l'espace, ledit moyen de propulsion et ledit moyen d'orientation étant commandé par un moyen de commande hydraulique ou pneumatique.

17. Procédé selon la revendication 16, dans lequel ledit moyen de commande comprend un interrupteur hydraulique ou pneumatique, une valve et une entrée de fluide sous pression coopérant avec ladite valve.

18. Procédé selon l'une des revendications 16 et 17, dans lequel ledit moyen d'orientation comprend au moins un orifice placé sur la surface latérale externe dudit appareil et communiquant avec ladite valve.

19. Procédé selon l'une des revendications 16 à 18, dans lequel ledit moyen de propulsion comprend au moins un orifice principal disposé sur la surface externe dudit appareil et communiquant avec ladite valve.

20. Procédé selon la revendication 19, dans lequel ledit moyen de propulsion comprend en outre au moins un orifice secondaire disposé sur un tube d'amenée de fluide sous pression raccordé à ladite entrée de fluide.

21. Procédé selon l'une des revendications 16 à 20, dans lequel ledit appareil comporte en outre un moyen d'exploration et guidage.

22. Procédé selon la revendication 21, dans lequel ledit moyen d'exploration et de guidage est commandé hydrauliquement.

23. Procédé selon la revendication 21, dans lequel ledit moyen d'exploration et de guidage est commandé pneumatiquement.

24. Procédé selon l'une des revendications 21 à 23, dans lequel ledit moyen d'exploration et de guidage est un dispositif de prise de vue.

25. Procédé selon l'une des revendications 16 à 24, dans lequel ledit appareil comporte en outre un moyen d'éclairage.

26. Procédé selon la revendication 25, dans lequel ledit moyen d'éclairage comprend au moins une fibre optique alimentée par une source lumineuse placée à l'extérieur.

27. Procédé selon l'une des revendications 16 à 26, dans lequel ledit appareil comporte en outre un moyen pour repérer la verticale.

28. Procédé selon l'une des revendications 16 à 27, dans lequel ledit appareil comporte en outre un moyen de nettoyage.

29. Procédé selon la revendication 28, dans lequel ledit moyen de nettoyage est constitué par un jet de fluide sous pression

30. Procédé selon la revendication 29, dans lequel ledit jet de fluide sous pression est également utilisé pour la propulsion.

31. Procédé selon la revendication 28, dans lequel ledit moyen de nettoyage comprend un outil capable d'exercer une action physique sur la paroi.

32. Procédé selon l'une des revendications 16 à 31, dans lequel ledit appareil comporte en outre un moyen de guidage d'un élément tubulaire.

33. Procédé selon l'une des revendications 16 à 32, dans lequel ledit appareil comporte en outre un moyen d'application d'un élément tubulaire sur une paroi.

34. Procédé selon l'une des revendications précédentes, pour l'installation d'un élément tubulaire dans une cavité inaccessible de diamètre inférieur à 200mm et d'au moins 80mm.
